Europäisches Patentamt

European Patent Office

Office européen des brevets

(11) Veröffentlichungsnummer: **0 253 204**
**A2**

(12) **EUROPÄISCHE PATENTANMELDUNG**

(21) Anmeldenummer: 87109418.1

(22) Anmeldetag: 30.06.87

(51) Int. Cl.⁴: **G21C 3/34**

(30) Priorität: 12.07.86 DE 3623573

(43) Veröffentlichungstag der Anmeldung:
20.01.88 Patentblatt 88/03

(84) Benannte Vertragsstaaten:
BE DE FR GB IT NL

(71) Anmelder: INTERATOM Gesellschaft mit
beschränkter Haftung
Friedrich-Ebert-Strasse
D-5060 Bergisch Gladbach 1(DE)

(72) Erfinder: Fischer, Erwin, Dipl.-Ing.
Merveldtstrasse 254
D-4350 Recklinghausen(DE)

(74) Vertreter: Mehl, Ernst, Dipl.-Ing. et al
Postfach 22 01 76
D-8000 München 22(DE)

(54) Abstandshaltegitter für Kernreaktor-Brennelementbündel.

(57) Zur Beabstandung der Brennstäbe innerhalb eines Kernreaktorbrennelementes insbesondere in hochkonvertierenden Leichtwasser-oder schnellen Brutreaktoren mit triagonaler Brennstabanordnung wird ein Abstandshaltegitter aufgebaut, bestehend aus Gruppen von quer zur Brennelementlängsachse schraubenlinienförmig zwischen den Brennstäben verlegten gewendelten Drähten, die endseitig mit einem das Brennelement umschließenden Umfangsgurt verbunden sind. Derartige Abstandshaltegitter stellen die Fixierung der Brennstäbe insbesondere beim neutronenstrahlunginduziertem Volumenschwellen der Strukturmaterialien sicher, ohne die Gitterhomogenität der Brennstäbe und die äußeren Querabmessungen des Brennelementes zu ändern, unter minimiertem Einsatz von neutrophargen Materialien. Die Strömungsdruckverluste im Reaktorkern bleiben durch die strömungsgünstigen Formen gering.

FIG 6

## Abstandshaltegitter für Kernreaktor-Brennelementbündel

Die Erfindung bezieht sich auf Brennelemente untermoderierter Leichtwasser-und schneller Brutreaktoren, deren Brennstäbe zu homogenen Dreiecksgitterkonfigurationen in engen Abständen zueinander gebündelt angeordnet sind.

Die Erfindung betrifft insbesondere Abstandshaltegitter, bestehend aus einem das Brennelement umschließenden Umfangsgurt (4) und damit verbundenen Gruppen von räumlich verwundenen Drähten (5), die quer zur Brennelementlängsachse zwischen den Brennstäben (2) verlegt sind und die Positionierung und Beabstandung der Brennstäbe bei betriebsbedingten Formänderungen der Strukturmaterialien sicherstellen. Hier ist insbesondere dem Phänomen des Volumenschwellens der Strukturmaterialien in den Spaltzonen schneller Brutreaktoren bei großen Bestrahlungsdosen mit hochenergetischen Neutronen entgegenzuwirken, das zur Vergrößerung der einzelnen Brennstabdurchmesser und der Abstandshalterkonstruktion selbst führt. Dabei muß sichergestellt sein, daß die gleichmäßige Verteilung von Brennstoff, Strukturwerkstoff und Kühlmittel erhalten bleibt, um lokale Neutronenfluß-und damit Leistungs-und Temperaturspitzen auszuschließen. Außerdem können keine die Festigkeitsgrenzen der Strukturwerkstoffe überschreitenden Spannungen zugelassen werden, die zum Versagen der Brennstoffhüllrohre führen. Neben der allgemeinen Anwendbarkeit der Erfindung ist diese speziell für offene Brennelemente vorgesehen, wie sie in untermoderierten hochkonvertierenden Druckwasserreaktoren oder schnellen natriumgekühlten Brutreaktoren Verwendung finden können.

Diese Reaktortypen besitzen eine hexagonale Anordnung der Brennstäbe mit relativ engen Abständen zwischen benachbarten Brennstäben.

Die Kernreaktorbrennelementbündel vorhandener schneller Brutreaktoren sind als mit einem Kasten unmantelte Brennelemente ausgeführt, der unter anderem zur Anpassung des Kühlmitteldurchsatzes an die örtlich unterschiedliche Leistungsfreisetzung im Reaktorkern dient.

Die zu einem hexagonalen Stabgitter angeordneten Brennstäbe in der Spaltzone des SNR-300 Prototypreaktors in Kalkar (BRD) werden z. B. zwischen dem Brennelementkopf (13) und dem Brennelementfuß (14) durch mehrere über die Brennelementlänge angeordnete Wabenabstandshalter mit hexagonalen Stabzellen positioniert und beabstandet. Betriebsbedingte Querausdehnungen der Abstandshalter infolge des bestrahlungsinduzierten Volumenschwellens werden einerseits durch Querausdehnungsmöglichkeiten der Brennelementhüllkästen und andererseits durch Blockierung und damit verbundenen Spannungsaufbau im Wabengitter kompensiert. Durch gleichzeitige Spannungsrelaxationsvorgänge im Abstandshaltermaterial bleiben die effektiven Spannungswerte jedoch unter den Festigkeitswerten.

In anderen Reaktoren, z. B. EBR II (USA); Phoenix (Frankreich) und BN-350 (Sowjetunion), werden einzelne Drähte oder Drahtbündel um die Mantelfläche in Brennstablängsrichtung - schraubenlinienförmig gewickelt. Die Drähte stellen dabei die Beabstandung benachbarter Brennstäbe sicher. Da das mit fortschreitender Betriebszeit der Brennelemente auftretende Strukturmaterialschwellen bei am Brennelementaußenrand durch die Brennelementkästen blockierten Ausdehnungsmöglichkeiten zu hohen Berührspannungen und Verformungen in den Brennstoffhüllrohren führt, wurden in einer Weiterentwicklung (Offenlegungsschrift 2443018) Drahtabstandshalter vorgeschlagen, bei denen mehrere Drähte als elastisches Drahtbündel längs der Brennstäbe - schraubenlinienförmig gewickelt werden. Die bei einer Durchmesservergrößerung benachbarter Brennstäbe auf das Beabstandungsdrahtbündel wirkenden Kräfte bewirken ein elastisches Ineinandergleiten der Einzeldrähte, so daß sich der Abstand der Brennstabmantelflächen bei konstanten Stabmittenabständen verringern kann.

Alle bereits bekannten Abstandshalterkonzepte sind für eine Verwendung in hochkonvertierenden Druckwasserreaktoren sowie in schnellen natriumgekühlten Brutreaktoren mit offenen Brennelementen nicht geeignet, weil sie hier nur geringe Standzeiten zuließen und damit zu unwirtschaftlichen Lösungen führen würden.

Eine Abstandshalteeinrichtung aus konstruktionsbedingt steifen Wabenabstandshaltern könnte bei einer gegenseitigen Abstützung benachbarter Brennelemente über die Abstandshalteraußengurte die schwellbedingten Materialspannungen nur teilweise durch Spannungsrelaxation kompensieren, so daß resultierend zu hohe, die Festigkeitsgrenzen der Bauteile überschreitende Spannungen und Verformungen zu erwarten wären, die eine Umorientierung des Stabgitters oder eine Zerstörung der Brennstoffhüllrohre oder der Abstandshalterstrukturen zur Folge hätten.

Die in Brennstablängsrichtung gewickelten Drahtabstandshalter schließen eine Beabstandung von Brennstäben im Übergangsbereich benachbarter Brennelemente und einen behinderungsfreien Brennelementwechsel aus.

Der Erfindung liegt daher die Aufgabe zugrunde, einen Abstandshalter zu schaffen, der insbesondere bei offenen Brennelementkonstruktionen die Fixierung der Brenn-, Struktur-und Absorberstabführungsrohre unter den zu erwartenden Volumenänderungen der Brennstoffhüllrohre und der Abstandshaltermaterialien sicherstellt und gleichzeitig die äußeren Querabmessungen am Umfangsgurt nicht ändert. Außerdem ist der durch die Abstandshalter zusätzlich in die Kernanordnung eingebrachte Anteil an neutrophargen Materialien aus neutronenphysikalischen Gründen soweit wie möglich zu begrenzen, wodurch auch die Kanalversperrung der einzelnen Kühlmittelunterkanäle zwischen den Brennstäben und die damit verbundenen Strömungsdruckverluste durch Abstandshaltereinbauten minimiert werden können.

Diese Aufgabe wird erfindungsgemäß durch Abstandshalter gelöst, die nach in den Ansprüchen 1 bis 11 aufgeführten Merkmalen ausgeführt sind. Bei derartig aufgebauten Abstandshaltern stützen sich die Stäbe des Brennstabbündels gegenseitig über die die Stäbe berührenden Drahtwendeln ab. Das Schwellen der Brennstabhüllrohre und der Drahtwendeln wird, ohne daß große Berührspannungen aufgebaut werden durch die über den Drahtdurchmesser regulierbare Biegeelastizität der Drahtwendeln ermöglicht. Im Vergleich zu den in SNR-300-Brennelementen benutzten Wabenabstandshaltern bewirken die gemäß der Erfindung aufgebauten Abstandshalter eine geringere mittlere Querschnittsversperrung der freien Strömungsquerschnitte, so daß auch eine Verringerung des Druckabfalls der Kühlmittelströmung durch die Abstandshalter zu erwarten ist. Die periodische Form und Anordnung der Einzeldrähte führt auch zu einer guten Durchmischung des Kühlmittels zwischen den einzelnen Strömungsunterkanälen des Stabbündels. Da nur geringe Mengen an zusätzlichem Strukturmaterial in das Brennelementgitter eingebracht werden, ergeben sich auch aus neutronenphysikalischer Sicht Vorteile bezüglich der parasitären Neutronenabsorption.

Ein erfindungsgemäßes Abstandshaltergitter besteht aus einem das Brennelement umschließenden Umfangsgurt und einer Vielzahl von gewendelten Einzeldrähten, die mit dem Umfangsgurt jeweils endseitig verbunden quer zur Brennelementlängsrichtung als Stützelement zwischen den Stäben angeordnet sind. Die Einzeldrähte sind in drei Drahtgruppen (15, 16, 17) einzuteilen, wobei die einzelnen Drahtgruppen dadurch gekennzeichnet sind, daß die Zentralachsen der Einzeldrähte jeweils zu zwei gegenüberliegenden Umfangsgurtseiten parallel verlaufen. Die Einzeldrähte aller Drahtgruppen können so angeordnet sein, daß deren Zentralachsen entweder in nur einer oder auf mehreren Brennelementquerebenen verteilt angeordnet sind.

Als Draht wird dabei ein Element verstanden, dessen Querabmessungen mehrere Größenordnungen kleiner sind als die Längsabmessungen, wobei die Querschnittsform sowohl kreisförmig als auch oval oder polygonal ausgebildet sein kann.

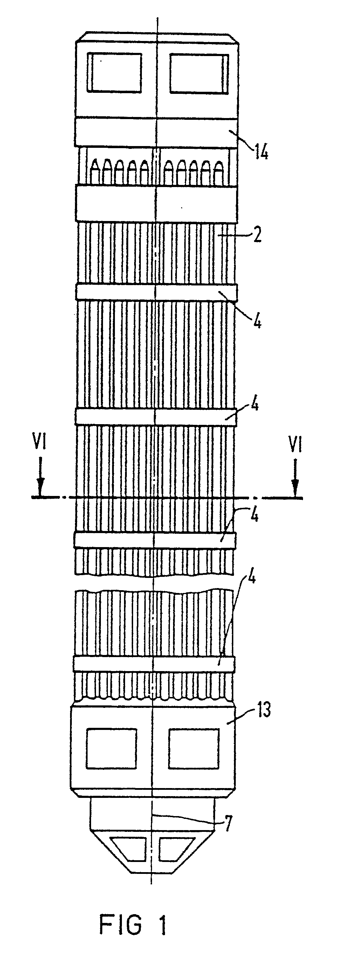

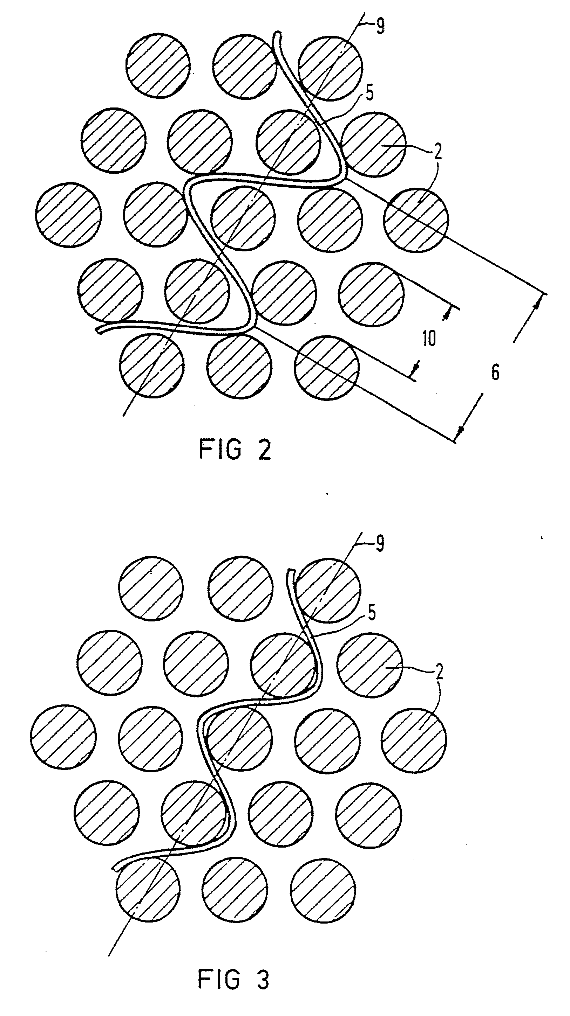

Die möglichen Anordnungen der Einzeldrähte im Stabgitter gehen aus den in Fig. 2 - 4 dargestellten Einzelheiten hervor. Dabei sind prinzipiell zwei Varianten zu unterscheiden.

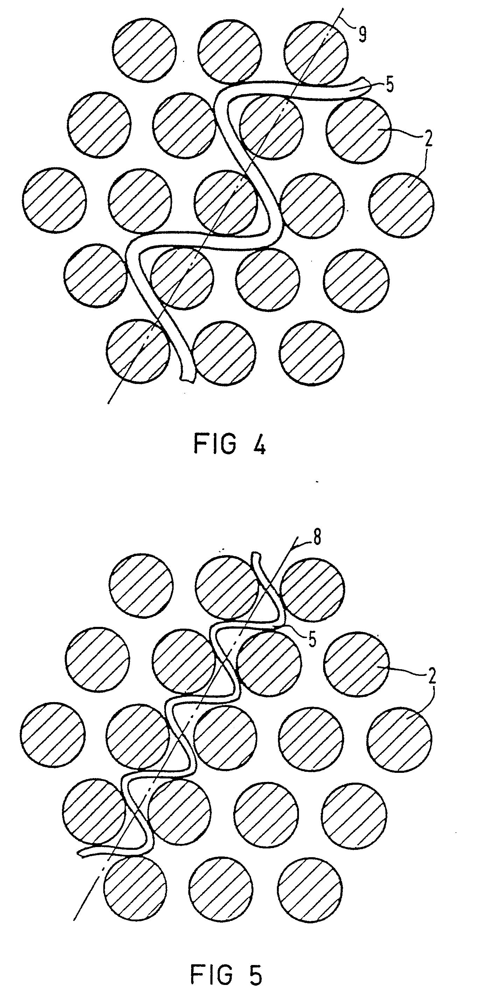

Bei der ersten Variante sind die Einzeldrähte jeweils in parallel zu drei Gurtseiten stehenden Stabreihen verlegt und besitzen eine Windungssteigung, die der zweifachen Repetitionslänge des Stabgitters entspricht. Durch Veränderung der Drahtquerschnittsabmessungen und der Windungsdurchmesser ergeben sich daraus drei Stützvarianten, die in den Fig. 2, 3 und 4 dargestellt sind. Fig. 2 zeigt die Projektion eines Einzeldrahtes in einer Gitterquerebene. Die Drahtstärke und der Windungsdurchmesser sind bei vorgegebener Windungssteigung so dimensioniert, daß sich die im Unteranspruch 5 beschriebene Drahtanordnung ergibt. Aus den Geometrieaufbauparametern des Stabgitters ergibt sich genau eine Drahtstärke und ein Drahtwindungsdurchmesser, bei denen sich eine Stützwirkung eines Einzeldrahtes in drei hintereinander angeordneten Stabreihen gemäß dem Unteranspruch 7 (Fig. 4) ergibt. Eine weitere Anordnung der Drähte zeigt Fig. 3 gemäß dem Unteranspruch 6, bei der nur Stäbe einer Stabreihe von einem Einzeldraht jeweils wechselseitig und höhenversetzt an zwei Punkten pro Stab gestützt werden.

Die zweite Variante, die insbesondere für Brutelemente geeignet ist, bei denen die einzelnen Gitterstäbe sehr eng zueinander angeordnet sind, geht aus Fig. 5 hervor. Hier sind die Drahtwendeln so verlegt, daß deren Zentralachsen mittig zwischen zwei benachbarten Stabreihen verlaufen und die Drahtwindungssteigung der Repetitionslänge des Stabgitters entspricht. Die Stäbe dieser Reihen werden jeweils an zwei höhenversetzten Punkten durch die Drahtwendel gestützt.

Eine ausreichende Positionierung und Sicherung aller zu einem Brennelement zugehörigen Brennstoffstäbe wird jedoch erst dann erreicht, wenn Einzeldrähte nach den obengenannten Varianten in den Vorzugsrichtungen des Stabgitters so verlegt werden, daß jeder einzelne Stab in mindestens drei am Stabumfang verteilten Punkten von den Beabstandungsdrähten in seiner Lage fixiert wird.

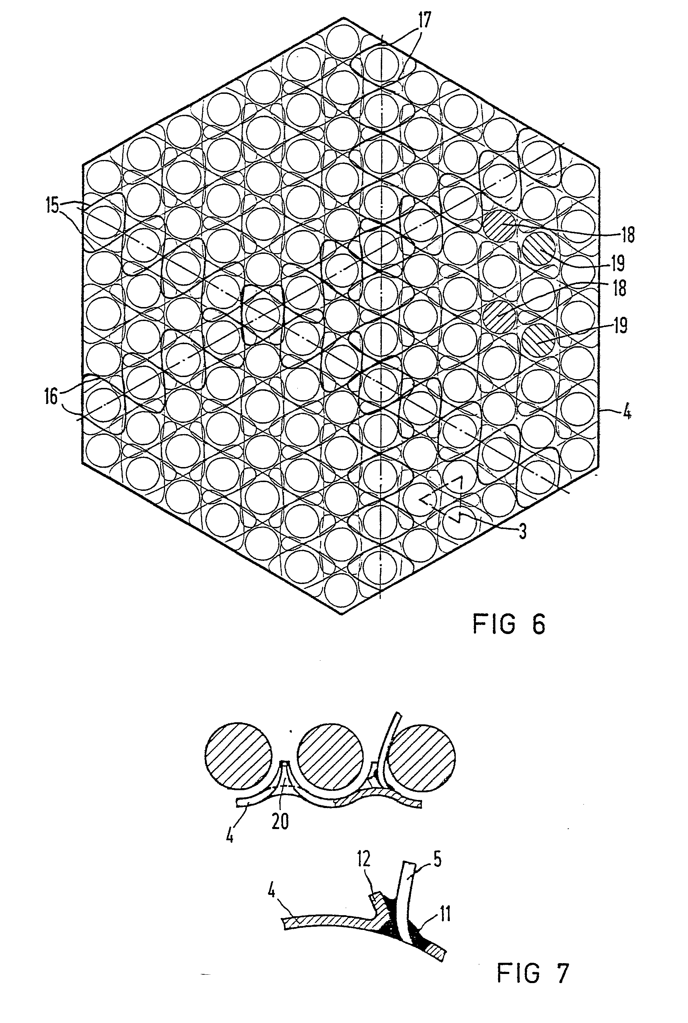

Aus einer Vielzahl von Möglichkeiten ist in Fig. 6 ein gemäß den Ansprüchen aufgebautes Abstandshaltergitter beispielhaft dargestellt. Die Einzeldrähte der einzelnen Drahtgruppen sind dabei gemäß dem Unteran spruch 5 angeordnet. Ausgehend von den Brennelementsymmetrielinien sind in jeweils jeder zweiten Stabreihe Einzeldrähte zweigängig rechtssteigend verlegt. Bei diesem Drahtgitteraufbau ergeben sich zwei Gruppen von Brennstoffstäben, die eine unterschiedliche Anzahl von Stützstellen haben. Stäbe (18), die in zwei Ebenen jeweils 6 diametral gegenüberliegende Stützpunkte besitzen und Stäbe (19), die jeweils vier diametral gegenüberliegende Stützpunkte in höhenversetzten Ebenen besitzen.

Die Einzeldrähte des beispielhaft beschriebenen Abstandshalters sind endseitig mit dem hexagonalen Umfangsgurt materialschlüssig, z. B. durch Verschweißung verbunden. Um eine haltbare Verbindung zwischen Umfangsgurt und Draht zu gewährleisten, sind am Gurt im Durchdringungsbereich der Drahtwendeln entsprechend große Fenster ausgestanzt, wobei das ausgestanzte Material noch einseitig materialschlüssig mit dem Gurt verbunden ist und als zusätzliche Anbindungsfahne zwischen Draht und Gurt dient. Nach der Herstellung der materialschlüssigen Verbindung zwischen Gurt und Drahtwendeln wird der Gurt außenseitig bearbeitet, so daß glatte Gurtoberflächen entstehen.

Der Umfangsgurt besteht aus dünnen, ebenen oder mit der Repetitionslänge des Stabgitters gewellten Bändern und besitzt jeweils im Bereich zwischen benachbarten Brennelementperipheriestäben an der oberen und unteren Gurtkante zwei zum Brennelementinnern abgewinkelte Abweisfahnen, die beim Brennelementwechsel ein Verhaken benachbarter Brennelemente verhindern.

Die axiale Sicherung des Abstandshalters im Brennelement wird durch die materialschlüssige Verbindung des Umfanggurtes mit sechs an der Brennelementperipherie angeordneten Strukturstäben erreicht.

Der Umfangsgurt kann entsprechend dem Reaktortyp, in dem die Abstandshalter eingesetzt werden, aus austenitischem hochwarmfestem Stahl oder aus weniger neutrophargem Zircaloy gefertigt sein. Als Drahtwendelmaterial kommen hochverfestigte und warmfeste Federstähle in Betracht.

**Ansprüche**

1. Abstandshalter, zur Fixierung der Abstände zwischen den Brenn-, Struktur-und Absorberführungsstäben von Kernreaktorbrennelementen (1), deren Stäbe (2) zu einem regelmäßigen Dreiecksgitterverband (3) angeordnet sind, bestehend aus einem das Brennelement begrenzenden polygonalen Umfangsgurt (4) und Gruppen von räumlich verwundenen, die Stäbe stützenden Drähten, **dadurch gekennzeichnet,** daß die Einzeldrähte (5) von Drahtgruppen (15, 16, 17) quer zur Brennelementlängsachse (7) schraubenlinienförmig zwischen den Stäben entlang einer zu den Gurtseiten und damit in oder parallel zu den Stabreihen verlaufenden Achsen angeordnet und die Drahtenden mit dem Umfangsgurt fest verbunden sind.

2. Abstandshalter nach Anspruch 1, **dadurch gekennzeichnet,** daß die Zentralachsen (8) der schraubenlinienförmig angeordneten Einzeldrähte mit Stabreihenachsen (9) identisch sind und die Schraubensteigung (6) der zweifachen Repetitionslänge (10) des Stabgitters in der Windungsrichtung entspricht.

3. Abstandshalter nach Anspruch 1, **dadurch gekennzeichnet,** daß die Zentralachsen (8) der schraubenlinienförmig angeordneten Einzeldrähte mittig zwischen zwei unmittelbar benachbarten Stabreihen verlaufen und die Schraubensteigung der Repetitionslänge des Stabgitters in der Windungsrichtung entspricht.

4. Abstandshalter nach den vorstehenden Ansprüchen, **dadurch gekennzeichnet,** daß die entlang einer Zentralachse angeordneten Drahtwendeln ein-oder zweigängig, links-oder rechtssteigend ausgeführt sind.

5. Abstandshalter nach vorstehenden Ansprüchen, **dadurch gekennzeichnet,** daß die Drahtwendeln jeweils wechselseitig nur die Stäbe stützen, die zu der Stabreihe, entlang derer diese verlegt, unmittelbar benachbart sind (Fig. 2).

6. Abstandshalter nach vorstehenden Ansprüchen, **dadurch gekennzeichnet,** daß die Drahtwendeln wechselseitig nur die Stäbe der Stabreihe stützen, in der die Drähte verlegt sind (Fig. 3).

7. Abstandshalter nach vorstehenden Ansprüchen, **dadurch gekennzeichnet,** daß die Drahtwendeln wechselseitig sowohl die Stäbe der Stabreihe stützen, in der die Drähte verlegt sind, als auch die Stäbe der dieser Stabreihe benachbarten Stabreihen (Fig. 4).

8. Abstandshalter nach vorstehenden Ansprüchen, bei dem die Drahtenden am Umfangsgurt (4) materialschlüssig mit demselben verbunden sind, **dadurch gekennzeichnet,** daß der Gurt im Durchdringungsbereich der Drahtwendeln Fenster (11) mit jeweils einer aufgebogenen Fahne (12) besitzt und die Drahtenden jeweils mit der Fahne und dem Gurt verbunden außenseitig bündig abschließen.

9. Abstandshalter nach vorstehenden Ansprüchen, **dadurch gekennzeichnet,** daß der Umfangsgurt (4) eine hexagonale Form hat und aus ebenen oder mit der Repetitionslänge des Stabgitters gewellten Bändern besteht.

10. Abstandshalter nach vorstehenden Ansprüchen, **dadurch gekennzeichnet,** daß der Umfangsgurt in den Bereichen zwischen zwei benachbarten Brennelementperipheriestäben zwei zum Brennelementinnern abgewinkelte Abweisfahnen (20) hat.

11. Abstandshalter aus den vorstehenden Ansprüchen, **dadurch gekennzeichnet,** daß der Umfangsgurt an mehreren Peripheriestäben zur axialen Sicherung der Abstandshalter im Brennelement befestigt ist.

86 P 8594 E

FIG 1

FIG 2

FIG 3

FIG 4

FIG 5

86 P 8594 E

FIG 6

FIG 7